# FASCICULE DE BREVET EUROPEEN

(11) **EP 3 667 898 B1**
(45) Date de publication et mention de la délivrance du brevet: **28.04.2021**
(21) Numéro de dépôt: 19212260.4
(22) Date de dépôt: 28.11.2019
(51) Int. Cl.: H02P 27/14, H02M 7/483

(54) **GESTION DE NOMBRE DE CELLULES DE PUISSANCE ACTIVES D'UN VARIATEUR DE VITESSE**
STEUERUNG EINER ANZAHL VON AKTIVEN LEISTUNGSZELLEN EINES DREHZAHLREGLERS
MANAGEMENT OF A NUMBER OF ACTIVE POWER CELLS OF A VARIABLE SPEED DRIVE

(30) Priorité: 14.12.2018 FR 1872975
(43) Date de publication de la demande: 17.06.2020
(73) Titulaire: Schneider Toshiba Inverter Europe SAS, 27120 Pacy sur Eure (FR)
(72) Inventeur: FRAPPE, Emmanuel, 92100 Boulogne Billancourt (FR); MALRAIT, François, 27120 Jouy sur Eure (FR); DEVOS, Thomas, 78955 Carrières sous Poissy (FR)
(74) Mandataire: van Buul, Bastiaan Richard Marinus

(56) Documents cités:
- EP-A2- 3 076 535
- WO-A2-2012/016062
- FR-A1- 3 060 238
- US-A- 5 625 545
- US-A1- 2015 124 506

## Description

### Domaine technique de l'invention :

L'invention concerne la gestion d'un variateur de vitesse en charge de l'alimentation d'un dispositif électrique tel qu'un moteur électrique par exemple.

### Etat de la technique :

Selon une topologie de puissance, une haute tension est fournie par un variateur de vitesse en mettant en série un certain nombre de convertisseurs basse tension (que l'on nomme alors cellules de puissance ou *"power cell"* en anglais). La commande de ces cellules de puissance permet de fournir une tension à plusieurs niveaux, ou multi-niveaux, chaque cellule de puissance ajoutant une tension permettant d'atteindre des niveaux de tension successifs. Un tel état de la technique est connu par exemple du document FR-A-3060238.

On entend par basse tension, selon les normes européennes, des tensions comprises entre 0 et 1000 volts en régime de tension alternative et entre 0 et 1500 volts en régime de tension continue. On entend par haute tension, des tensions supérieures à 1000 volts en régime de tension alternative et supérieures à 1500 volts en régime de tension continue.

Par exemple, le variateur de vitesse peut comprendre N cellules de puissance, N étant supérieur ou égal à 1. Lorsque le variateur de vitesse fournit une alimentation triphasée, il comprend 3*N cellules de puissance, N cellules de puissance étant dédiées à chacune des trois phases.

En pratique, il arrive souvent que les N cellules de puissance sur chaque phase ne soient pas nécessaires pour générer la tension requise.

En effet, le niveau de tension à appliquer au moteur est environ proportionnel à la vitesse du moteur. A basse vitesse, la tension est donc faible comparativement à la tension maximale qu'il est possible de délivrer lorsque les N cellules de puissance sont actives et à pleine puissance. Chacune des N cellules délivre alors une tension faible, ce qui a tout de même tendance à vieillir les composants de la cellule de puissance, à accentuer l'effet des imperfections de l'étage de puissance et le fonctionnement du système d'alimentation est alors sous optimal.

En outre, certaines applications nécessitent une continuité dans l'alimentation en énergie. Ainsi, en cas de défaut d'une ou de plusieurs cellules de puissance, des solutions de contournement (ou "by-pass" en anglais) du ou des cellules de puissance en défaut peuvent être mises en place.

En outre, lorsqu'une tension élevée est requise en sortie du variateur de vitesse, dans une configuration comprenant N cellules de puissance, le contournement de l'une d'elles fait perdre un niveau de tension, et le système fonctionne alors en mode dégradé et ne peut fournir une pleine tension.

Afin de pallier cet inconvénient, il peut être prévu de définir des configurations "*N*+*1*" ou "*N*+*2*" qui consistent à ajouter des cellules de puissance additionnelles qui ne sont pas utilisés en fonctionnement normal et qui sont mises en fonctionnement lors d'un défaut d'un ou de deux cellules de puissance, de manière à ce que le système d'alimentation puisse toujours fournir une pleine tension.

Il existe ainsi un besoin d'optimiser l'utilisation des cellules de puissance d'un variateur de vitesse en charge de l'alimentation d'un dispositif électrique tel qu'un moteur électrique.

La présente invention résout les inconvénients mentionnés ci-dessus.

### Exposé de l'invention :

Un premier aspect de l'invention concerne un procédé de commande d'un variateur de vitesse alimentant un moteur électrique, le variateur de vitesse comprenant une pluralité d'au moins Ni cellules de puissance basse tension reliées en série pour au moins une phase d'indice i, le procédé comprenant :
sur réception d'une commande de vitesse, détermination d'un nombre Mi de cellules suffisant pour alimenter le moteur à une tension cible V qui est déterminée à partir de la commande de vitesse ;
activation des Mi cellules de puissance parmi les Ni cellules de puissance, et désactivation des Ni-Mi autres cellules de puissance afin d'alimenter le moteur selon la commande de vitesse.

Ainsi, contrairement aux solutions de l'art antérieur, le nombre de cellules de puissance actives n'est pas fixe, ce qui présente l'avantage de pouvoir adapter le nombre de cellules de puissance actives à la tension de sortie du variateur qui est fournie au moteur électrique. Cela présente les avantages de réduire les pertes de cellules de puissance, d'améliorer l'état thermique du variateur de vitesse, d'améliorer la protection moteur en surtension et de réduire l'impact des imperfections de l'étage de conversion de puissance sur la tension ciblée en sortie.

Les Ni cellules de puissance peuvent correspondre à une phase i d'une alimentation triphasée et les autres phases peuvent comprendre le même nombre Ni de cellules de puissance. En variante, les nombres Ni de cellules de puissance du variateur de vitesse différent.

Selon un mode de réalisation, le variateur de vitesse comprend plusieurs phases, chaque phase d'indice j ayant Nj cellules de puissance et le nombre Mi pour une phase d'indice i peut être inférieur au minimum des valeurs Nj pour j variant entre 1 et le nombre de phases du variateur de vitesse.

Un tel mode de réalisation permet d'assurer des tensions équilibrées entre les différentes phases du variateur de vitesse.

En complément, chaque cellule de puissance peut être apte à fournir une tension de sortie inférieure à une valeur maximale Vₘₐₓ, le procédé comprenant la détermination, à partir de la commande de vitesse, de la tension de sortie cible V du variateur de vitesse, et Mi est tel que Mi*Vₘₐₓ≥V.

Ainsi, le nombre Mi permet d'assurer de délivrer la tension de sortie souhaitée.

En complément, Mi peut être le plus petit entier tel que Mi*Vₘₐₓ≥V.

Ainsi, le minimum de cellules de puissance requis pour fournir la tension de sortie souhaitée sont activés, et l'utilisation du variateur de vitesse est ainsi optimisée.

Selon un mode de réalisation, préalablement à la réception de la commande de vitesse, le procédé peut comprendre une phase précédente dans laquelle un nombre Ki de cellules de puissance sont actives pour alimenter le moteur, Ki étant inférieur ou égal à Ni et Ki étant différent de Mi ;
si Ki est supérieur à Mi, Ki-Mi cellules de puissance peuvent être désactivées afin d'alimenter le moteur selon la commande de vitesse ;
sinon, Mi-Ki cellules de puissance sont activées afin d'alimenter le moteur selon la commande de vitesse.

Ce mode de réalisation permet ainsi d'optimiser le fonctionnement du variateur de vitesse en fonction de la réception d'une commande de vitesse.

Selon un mode de réalisation, si | Mi-Ki | ≥2, les | Mi-Ki | cellules de puissance peuvent être activées/désactivées l'une après l'autre.

De telles activations/désactivations successives, et non simultanées, permettent d'augmenter/diminuer de manière progressive la tension sur le moteur en minimisant les risques de surtension suite à la commutation d'un interrupteur pour activer/désactiver une cellule de puissance.

Selon un mode de réalisation, le procédé peut comprendre en outre la transmission de signaux de commande des Mi cellules de puissance actives et, pour chaque cellule de puissance active, le signal de commande comprend des ordres de commutation de certains interrupteurs d'un pont en H de la cellule de puissance, et chaque signal de commande est généré à partir d'un signal triangulaire et d'une valeur de tension de commande de référence.

En complément, selon un premier mode de réalisation, lors de la phase précédente, Ki signaux triangulaires déphasés les uns par rapport aux autres de 2 π /Ki sont utilisés pour générer les signaux de commande respectifs, équivalents à des valeurs respectives V^{ref}ₜ de tensions de commande de référence, t variant entre 1 et Ki.

Suite à la réception de la commande de vitesse, Mi signaux triangulaires déphasés les uns par rapport aux autres de 2 π /Mi sont utilisés pour générer les signaux de commande respectifs, équivalents à de nouvelles valeurs respectives V^{ref}ₜ de tensions de commande de référence, t variant entre 1 et Ki, les nouvelles valeurs étant déterminées à partir de la commande de vitesse.

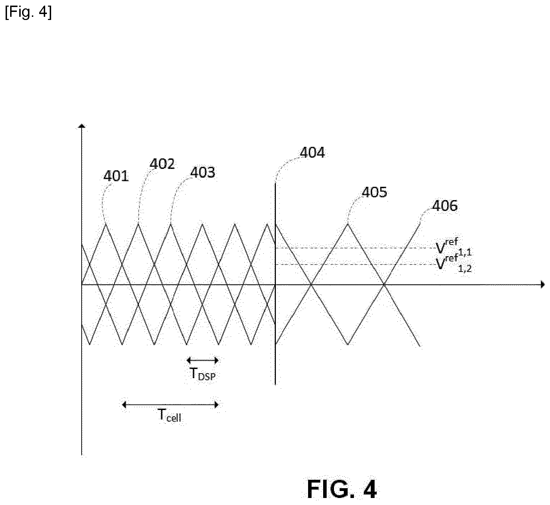

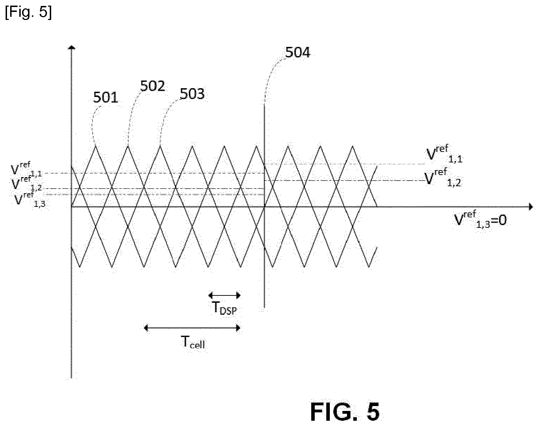

Le terme « équivalent » signifie que chacune des valeurs de tensions de commande de référence est comparée avec l'un des signaux triangulaires afin de déterminer les signaux de commande qui permettent la commutation des interrupteurs d'un pont en H d'une cellule de puissance. Une telle comparaison sera mieux comprise au vu des explications données ci-après en référence aux figures 4 et 5.

Le premier mode de réalisation permet d'adapter le nombre de cellules de puissance actives à la tension requise, tout en minimisant le contenu harmonique de la tension en sortie du variateur de vitesse.

En variante, selon un deuxième mode de réalisation, si Ki est supérieur à Mi :
lors de la phase précédente, Ki signaux triangulaires déphasés les uns par rapport aux autres de 2 π /Ki sont utilisés pour générer les signaux de commandes respectifs, équivalents à des valeurs respectives V^{ref}ₜ de tensions de commande de référence, t variant entre 1 et Ki ;
suite à la réception de la commande de vitesse, Ki signaux triangulaires déphasés les uns par rapport aux autres de 2 π /Ki sont utilisés pour générer les signaux de commandes respectifs, équivalents à de nouvelles valeurs respectives V^{ref}ₜ de tensions de commande de référence, i variant entre 1 et Ki, Ki-Mi nouvelles valeurs V^{ref}ₜ sont fixées égales à zéro. Cela revient à désactiver Ki-Mi cellules de puissance en fixant leurs rapports cycliques à zéro.

Le deuxième mode de réalisation est plus rapide et aisé à mettre en œuvre que le premier mode de réalisation, au détriment de la qualité de la tension en sortie du variateur de vitesse.

Selon un mode de réalisation, le variateur de vitesse peut comprendre, pour chaque cellule de puissance, un interrupteur apte à connecter et déconnecter la cellule de puissance de la série de cellules de puissance, l'interrupteur d'une cellule de puissance active est ouvert et l'interrupteur d'une cellule de puissance inactive est fermé.

Ainsi, les cellules de puissance peuvent être désactivées et activées au moyen d'un interrupteur de contournement ou « *bypass* » en anglais.

Selon un mode de réalisation, le procédé peut comprendre en outre la sélection de Mi cellules de puissance parmi les Ni cellules de puissance en fonction d'un critère donné, et l'activation des Mi cellules de puissance sélectionnées.

Ainsi, l'utilisation du variateur de vitesse, et en particulier des cellules de puissance, est optimisée.

En complément, chacune des au moins Ni cellules de puissance peut être associée avec un compteur mesurant un temps de fonctionnement de la cellule de puissance, et le critère donné peut dépendre des temps de fonctionnement respectifs des cellules de puissance.

Ainsi, les vieillissements/temps de fonctionnement des cellules de puissance sont contrôlés selon l'invention.

En complément, les Mi cellules de puissance peuvent être sélectionnées de manière à réduire un écart type entre les temps de fonctionnement des cellules de puissance.

Il est ainsi assuré un vieillissement homogène des cellules de puissance et donc une augmentation de la durée de vie du variateur de vitesse.

Un deuxième aspect de l'invention concerne un programme d'ordinateur exécutable par une unité de calcul et comprenant des instructions pour, lorsqu'il est exécuté par l'unité de calcul, mettre en œuvre les étapes d'un procédé selon le premier aspect de l'invention.

Un troisième aspect de l'invention concerne un dispositif de commande d'un variateur de vitesse alimentant un moteur électrique, le variateur de vitesse comprenant une pluralité d'au moins Ni de cellules de puissance basse tension reliées en série pour au moins une phase d'indice i, le dispositif de commande comprenant :
une interface configurée pour recevoir une commande de vitesse ;
une unité de calcul configurée pour déterminer un nombre Mi de cellules suffisant pour alimenter le moteur à une tension déterminée à partir de la commande de vitesse ;
activation des Mi cellules de puissance parmi les Ni cellules de puissance, et désactivation des Ni-Mi autres cellules de puissance afin d'alimenter le moteur selon la commande de vitesse.

Selon un mode de réalisation, le dispositif peut comprendre un processeur de signal numérique comprenant l'interface pour la réception de la commande de vitesse, le processeur de signal numérique commandant en outre un circuit imprimé programmable, des sorties respectives du circuit imprimé programmable étant reliées aux Ni cellules de puissance, et des signaux de commande peuvent être transmis à des cellules de commande des Mi cellules de puissance actives.

### Brève description des figures :

A titre d'exemple seulement, les modes de réalisation de l'invention seront décrits en référence aux dessins, parmi lesquels :
[FIG.1] - la figure 1 illustre un système de pilotage de l'alimentation d'un moteur électrique selon un mode de réalisation de l'invention ;
[FIG. 2a] [FIG. 2b] - les figures 2a et 2b montrent l'évolution du nombre de cellules de puissance actives en fonction de la tension de sortie du variateur de vitesse souhaitée, et en fonction de la tension de sortie d'une cellule de puissance ;
[FIG. 3] - la figure 3 illustre la structure d'un dispositif de commande selon un mode de réalisation de l'invention ;
[FIG. 4] - la figure 4 illustre les signaux de commande délivrés par le dispositif de commande selon un premier mode de réalisation de l'invention ;
[FIG. 5] - la figure 5 illustre les signaux de commande délivrés par le dispositif de commande selon un deuxième mode de réalisation de l'invention ;
[FIG. 6] - la figure 6 est un diagramme illustrant les étapes d'un procédé selon un mode de réalisation de l'invention.

### Description détaillée :

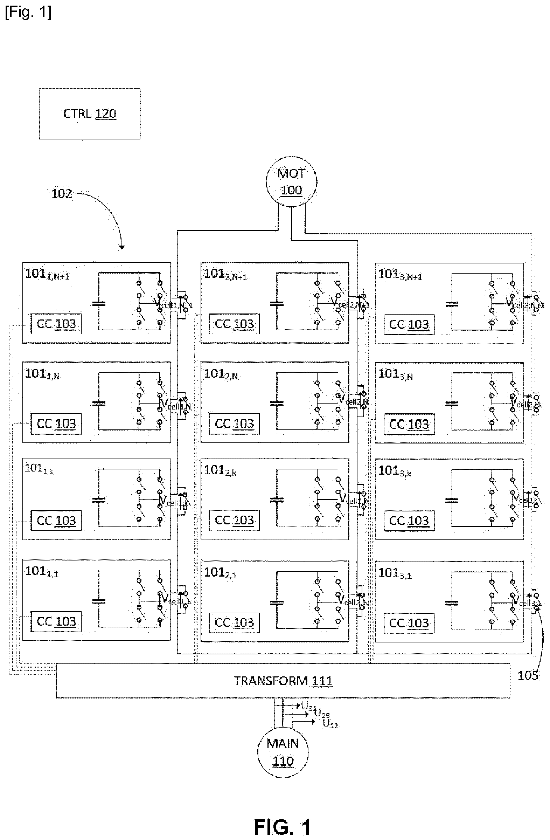

La figure 1 présente un système d'alimentation d'un moteur électrique 100, tel qu'un moteur à induction par exemple, alimenté par une alimentation variable triphasée. Un tel moteur est donné à titre d'exemple, mais ne saurait restreindre l'invention à ce seul exemple, l'invention étant applicable à tout moteur alimenté par un variateur de vitesse comprenant plusieurs cellules de puissance.

Un variateur de vitesse 102 comprend un transformateur 111 recevant une alimentation variable triphasée du secteur 110. Le secondaire du transformateur 111 est relié à un étage de puissance. Le transformateur 111 peut être un transformateur à multi-enroulements de manière à délivrer des tensions à plusieurs cellules de puissance décrites ci-après.

L'étage de puissance selon l'invention peut comprendre une ou plusieurs cellules de puissance basse tension 101. Dans l'exemple illustré sur la figure 1, le moteur reçoit une alimentation triphasée et l'étage de puissance comprend 3*(N+1) cellules de puissance, avec N+1 cellules de puissance dédiées à chaque phase, N étant supérieur ou égal à 2.

En référence à la figure 1, un système à 3*(N+1) cellules de puissance est représenté, une cellule de puissance étant réservée par phase en cas de panne de l'une des cellules de puissance active. Un tel exemple est donné à des fins illustratives uniquement. En effet, l'invention s'applique également à un système à N cellules de puissances (ou 3*N pour une alimentation triphasée), ou à un système à N+2 (ou plus de N+2) cellules de puissance (ou 3*(N+2) pour une alimentation triphasée). En outre, chaque phase i d'un variateur de vitesse peut comprendre un nombre Ni de cellules de puissance, avec des Ni de valeurs différentes, et l'invention peut être appliquée indépendamment à chacune des phases.

Chaque cellule de puissance 101 reçoit en entrée l'alimentation triphasée issue d'un des secondaires du transformateur 111 et peut comprendre un redresseur (non représenté sur la figure 1) en entrée, le redresseur étant apte à redresser l'alimentation triphasée reçue de manière à fournir une tension continue. La tension redressée continue obtenue pour chaque cellule de puissance 101 est aussi appelée tension bus courant continu, DC, ou tension bus. Le redresseur peut comprendre un pont de diodes, un pont à thyristors ou tout autre système connu pour redresser une tension.

En sortie du redresseur, chaque cellule de puissance 101 peut comprendre une capacité apte à stocker de l'énergie électrique, ainsi qu'un module de génération de tension recevant des signaux de modulation par largeur d'impulsions PWM (pour « *Pulse Width Modulation* » en anglais). Un tel module de génération peut comprendre un pont en H comprenant quatre interrupteurs commandés deux par deux. Un système d'électronique de puissance utilisant un tel principe de tension hachée applique au moteur 100, par phase, une tension qui est proportionnelle à une ou plusieurs tensions redressées. En moyenne, la proportion appliquée correspond au ratio entre la tension cible et la tension redressée de référence (définie ci-après). Le fonctionnement d'un pont en H est bien connu et ne sera pas décrit davantage dans la présente demande.

Les interrupteurs du pont en H peuvent être des transistors de type IGBT (pour « *Insulated Gate Bipolar Transistor* ») qui présentent l'avantage de pouvoir être commutés rapidement.

Les interrupteurs d'une cellule de puissance 101 sont contrôlés par une cellule de commande 103 de la cellule de puissance 101.

Le système comprend en outre un dispositif de commande 120 apte à piloter l'alimentation électrique du moteur 100. A cet effet, le dispositif de commande 120 peut commander les cellules de contrôle 103 des cellules de puissance 101. Le dispositif de commande 120 peut en outre commander des interrupteurs 105 permettant de mettre en série un sous-ensemble des N+1 cellules de puissance pour chaque phase. En variante, ces interrupteurs sont commandés par le dispositif de commande 120 par l'intermédiaire des cellules de contrôle 103.

Les cellules de puissance 101 peuvent recevoir des signaux de commande depuis le dispositif de commande 120 à partir desquels les cellules de puissance 101 peuvent commander les interrupteurs du pont en H.

En variante, les cellules de puissance 101 peuvent recevoir des tensions de référence depuis le dispositif de commande 120 à partir desquels les cellules de puissance 101 peuvent déterminer la proportion PWM (le rapport cyclique) à appliquer à la tension redressée, et ainsi déterminer les commandes à envoyer aux interrupteurs du pont en H.

Les tensions triphasées alimentant le moteur 100 sont ainsi obtenues en sommant les tensions de sortie PWM des cellules de puissance 101 pour lesquelles les interrupteurs 105 sont ouverts. Une cellule est dite « active » lorsque son interrupteur 105 est ouvert et lorsque le rapport cyclique qu'elle applique n'est pas nul. Ainsi, une cellule de puissance pour laquelle l'interrupteur 105 est ouvert mais pour laquelle le rapport cyclique est nul peut être considérée comme désactivée. Une cellule active peut ainsi être considérée comme toute cellule de puissance qui délivre une tension non nulle en sortie.

Selon l'art antérieur, le nombre de cellules de puissance actives est fixe, et ainsi, dans le cas d'une faible tension à délivrer au moteur 100, chaque cellule de puissance 101 fournit de petites impulsions de tension.

L'invention propose au contraire de déterminer le nombre de cellules de puissance 101 actives, parmi les cellules de puissance d'une phase, en fonction de l'amplitude de la tension moteur de référence reçue par le dispositif de commande 120 (ou déterminée par le dispositif de commande 120 à partir d'une commande de vitesse). Le même nombre peut être sélectionné pour les autres phases. En variante, des nombres de cellules actives différents peuvent être sélectionnés pour les différentes phases.

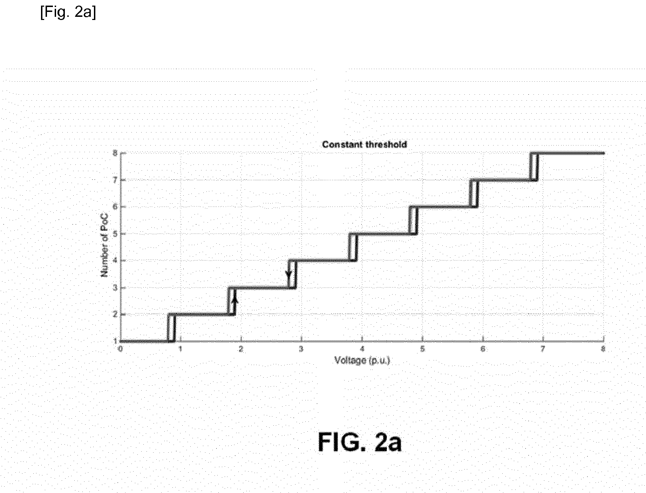

La figure 2a illustre l'évolution du nombre de cellules de puissance 101 actives, en fonction de l'amplitude de la tension moteur de référence, selon un mode de réalisation de l'invention.

La tension moteur de référence est indiquée dans la commande reçue par le dispositif de commande 120. En variante, la tension moteur de référence peut être corrigée afin de tenir compte de défauts dans l'étage de puissance.

On note sur la figure 2a que des valeurs seuil de tension peuvent être utilisées pour décider d'activer ou de désactiver une ou plusieurs des cellules de puissance 101 d'une phase donnée. Comme illustré sur la figure 2a, les seuils utilisés pour diminuer le nombre de cellules actives peuvent être respectivement inférieurs aux seuils utilisés pour augmenter le nombre de cellules actives. En effet, cela permet de réduire le nombre d'opérations d'activation/désactivation, réduisant ainsi les pertes de puissance, et optimisant ainsi l'utilisation du système d'alimentation. En outre, si plusieurs cellules de puissance sont désactivées, elles le sont l'une après l'autre et non pas toutes simultanément.

En outre, le nombre de cellules actives étant réduit :
- l'état thermique du variateur de vitesse 102 est amélioré ; et
- chaque cellule de puissance 101 étant imparfaite, l'impact des imperfections de l'étage de puissance sur la tension désirée sur le moteur 100 est réduite.

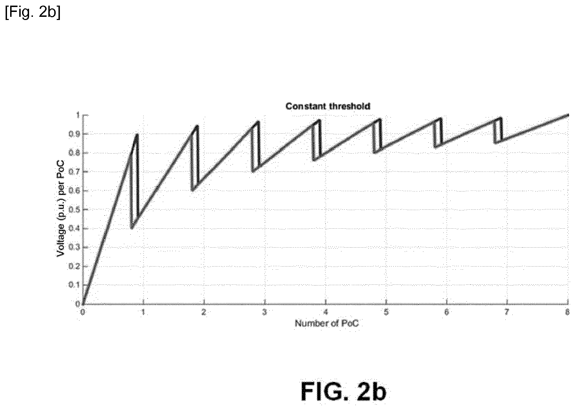

La figure 2b illustre la tension délivrée en sortie de chaque cellule de puissance 101 en fonction du nombre de cellules de puissance actives, selon un mode de réalisation de l'invention.

Dans les solutions de l'art antérieur dans lesquelles le nombre de cellules de puissance actives est fixe, la tension délivrée par chaque cellule de puissance 101 augmente linéairement avec la tension de référence moteur.

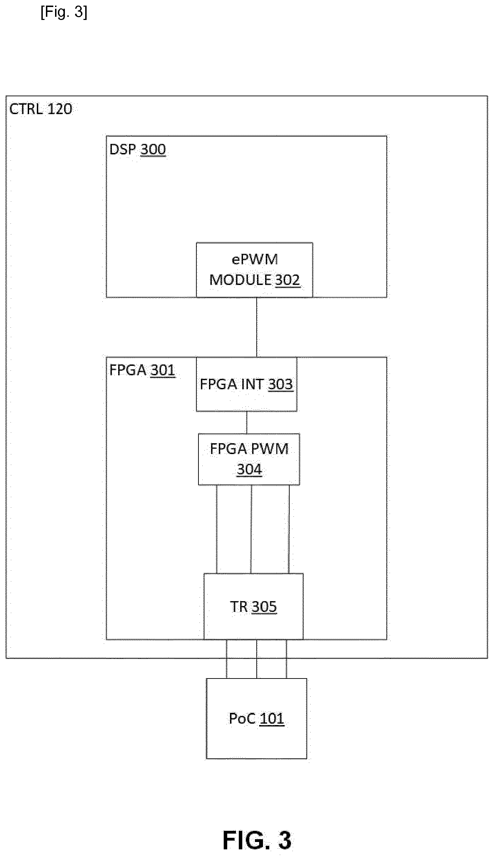

La figure 3 illustre la structure du dispositif de commande 120 selon un mode de réalisation de l'invention.

Le dispositif de commande 120 comprend un processeur 300 tel qu'un processeur de signal numérique, DSP (pour « *Digital Signal Processor*» en anglais), ainsi qu'un circuit intégré programmable 301 de type FPGA, pour « *Field-Programmable Gate Array* » en anglais.

Le processeur 300 est configuré pour déterminer les tensions de référence moteur à transmettre au FPGA 301. En particulier, le processeur 300 comprend un module ePWM 302 configuré pour recevoir une première tension moteur de référence en entrée, calculée précédemment par d'autres composants du processeur 300 non détaillés sur la figure 3.

A partir de la tension moteur de référence, le module ePWM 302 peut calculer des ordres de commande, tels que des ordres de commande PWM. Les ordres de commande sont générés par la comparaison de signaux triangulaires et des tensions de commande de référence.

A chaque cellule de contrôle 103 d'une cellule de puissance 101 est destiné un signal de commande PWM issu de la comparaison de signaux triangulaires et de tension de commande de référence afin de déterminer quand les transistors IGBT du pont en H doivent être commutés, la cellule de puissance 101 fournissant ainsi une tension de sortie sous forme de modulation par largeur d'impulsions PWM

Toutefois, le nombre de signaux de commande correspondant à chaque IGBT devenant trop grand, selon un mode de réalisation de l'invention, un FPGA 301 peut être inséré entre le processeur 300 et les cellules de puissance 101, et les ordres de commande issus du processeur 300 ne sont donc pas transmis directement aux cellules de puissance 101.

Dans ce cas, le module ePWM 302 envoie les tensions de référence au FPGA 301. Cet envoi peut par exemple être réalisé par l'intermédiaire de signaux PWM pour lesquels les rapports cycliques correspondent aux tensions des trois phases du moteur. Sans perte de généralité, d'autres moyens de communication peuvent être utilisés.

A partir de la tension moteur de référence, le module ePWM 302 peut calculer des ordres de commande, tels que des ordres de commande PWM. Les ordres de commande sont générés par la comparaison de signaux triangulaires et des tensions de commande de référence,

Le FPGA 301 peut comprendre en entrée une unité d'intégration 303 apte à intégrer le signal PWM envoyé par le module ePWM 302 pour récupérer les tensions moteur de référence.

Les modules 302 et 303 sont optionnels et ne sont utilisés que dans le cas où le processeur 300 est initialement conçu pour fournir des ordres de commande directement à un nombre limité de cellules de puissance 101, et où le FPGA 301 est ajouté en sortie selon des modes de réalisation de l'invention, sans avoir à changer de processeur 300. Toutefois, le module 303 n'est pas utile lorsque le module 302 du processeur 300 n'est pas présent et lorsque le processeur 300 fournit directement une première tension moteur de référence au FPGA 301, sans encodage des tensions de référence par une PWM.

Ainsi, selon un mode de réalisation sans les modules 302 et 303, la tension moteur de référence issue du processeur 300 est transmise directement à un module de génération de commande PWM 304 du FPGA 301.

Le module 304 prend en entrée une tension moteur de référence, la tension bus redressée des cellules de puissance et, selon l'invention, le nombre de cellules actives pour une phase afin de générer des ordres de commande PWM à destination des cellules de contrôle 103 des cellules de puissance 101. Les ordres de commande peuvent être transmis aux cellules de puissance 101 via un module de transmission 305. Aucune restriction n'est attachée au module de transmission qui peut comprendre un ensemble de fibres pour transporter les signaux de commande avec une isolation galvanique.

L'invention propose de modifier le nombre de cellules de puissance 101 actives par phase en fonction de la tension moteur de référence (issue de l'unité d'intégration 303 ou issue directement du processeur 300, selon le mode de réalisation considéré). Le nombre de cellules de puissance 101 actives par phase peut être déterminé par le processeur 300 ou par le FPGA 301, par exemple à partir des courbes présentées en Figures 2a et 2b ou plus généralement à partir d'un jeu de règles indiquant un nombre de cellules de puissance 101 actives pour chaque niveau de tension, en phase d'accélération ou de décélération du moteur. Deux modes de réalisation présentés ci-après sont prévus à cet effet.

Selon un premier mode de réalisation de l'invention, illustré en référence à la figure 4, le changement du nombre de cellules de puissance actives est synchronisé entre le processeur 300 et le FPGA 301. La figure 4 illustre les signaux de commande lors du passage d'une configuration dans laquelle trois cellules de puissance 101 sont actives à une configuration dans laquelle deux cellules de puissance 101 sont actives, pour une phase donnée, à l'instant 404. De telles configurations dépendent bien entendu de la situation et sont données uniquement à titre illustratif. La figure 4 correspond à des signaux de commande pour une seule phase parmi les trois phases alimentant le moteur 100 de la figure 1.

Dans la configuration précédente à trois cellules de puissance 101 actives, les signaux triangulaires 401, 402 et 403 sont générés par le FPGA 301 pour trois cellules de puissance 101 de la première phase. Ces signaux triangulaires sont associés à des tensions de commande de référence respectives V^{ref}_{1,1}, V^{ref}_{1,2} et V^{ref}_{1,3} pour comparaison et génération des ordres de commande PWM à envoyer aux cellules de puissance concernées. Les premiers indices « 1 » des notations V^{ref}_{1,1}, V^{ref}_{1,2} et V^{ref}_{1,3} désignent la première phase parmi les trois phases du variateur de vitesse 102. L'invention s'applique indifféremment aux autres phases.

Les signaux triangulaires ont un décalage de phase égal à 2π divisé par le nombre de cellules actives, soit 2 π /3 dans l'exemple illustré sur la figure 4. Un tel décalage permet d'éviter les pics de tension lorsque les tensions de sortie des cellules de puissance 101 actives sont sommées pour alimenter le moteur 100.

La période du DSP 300 qui fournit les signaux triangulaires en sortie, correspond alors à un tiers de la période d'un signal triangulaire.

A l'instant 404, il est déterminé selon l'invention que le nombre de cellules de puissance 101 actives est réduit à 2. Une telle détermination peut être consécutive à la réception d'une nouvelle commande de vitesse et/ou du calcul d'une nouvelle valeur de tension moteur de référence, notamment de valeur inférieure à une valeur précédente.

La fréquence du DSP 300 est alors modifiée pour être adaptée à une telle diminution. Dans l'exemple considéré, la période du DSP 300 est multipliée par 1,5 (donc la fréquence est réduite d'un tiers).

Deux signaux triangulaires 405 et 406 sont alors générés par l'unité 304 pour les deux cellules de puissance 101 actives.

L'unité 304 calcule en outre les nouvelles valeurs de V^{ref}_{1,1} et V^{ref}_{1,2} correspondant aux signaux triangulaires 405 et 406. Les nouvelles valeurs V^{ref}_{1,1} et V^{ref}_{1,2} sont calculées de manière à fournir la tension de sortie ciblée pour alimenter le moteur 100. La valeur V^{ref}_{1,3} n'est pas calculée car la cellule 101_{1,3} est désactivée après l'instant 404. Les signaux de commande PWM sont ensuite générés et transmis aux deux cellules de puissance 101_{1,1} et 101_{1,2} actives.

Le premier mode de réalisation permet de minimiser le contenu harmonique du signal en sortie du variateur de vitesse 102, et améliore ainsi la qualité du signal.

Selon un deuxième mode de réalisation, seul le FPGA 301 adapte son fonctionnement de manière à réduire le nombre de cellules de puissance 101 actives, sans que cela n'impacte le fonctionnement du processeur 300.

Le FPGA 301 fournit ainsi pendant une phase précédente les signaux triangulaires 501 à 503 associés respectivement à des tensions de commande de référence respectives V^{ref}_{1,1}, V^{ref}_{1,2} et V^{ref}_{1,3}.

A l'instant 504, une modification du nombre de cellules de puissance 101 actives de trois à deux est déterminée, par exemple en raison de la réception d'une nouvelle commande de vitesse et/ou du calcul d'une nouvelle tension moteur de référence.

La période T_{DSP} du processeur 300 n'est pas modifiée et les signaux triangulaires restent ainsi décalés de 2 π /3.

Le FPGA 301 recalcule les valeurs V^{ref}_{1,1} et V^{ref}_{1,2} de manière à réaliser la tension de sortie cible du variateur de vitesse, et fixe la valeur V^{ref}_{1,3} à zéro. Le rapport cyclique appliqué par la cellule de puissance 101_{1,3} est donc égal à 0 et la tension en sortie de cette cellule de puissance 101_{1,3} est nulle. La cellule de puissance 101_{1,3} peut alors être considérée comme inactive. Le deuxième mode de réalisation permet ainsi d'adapter le nombre de cellules de puissance 101 actives sans nécessiter de synchronisation entre le processeur 300 et le FPGA 301 et donc sans impacter le fonctionnement du processeur 300.

Selon des modes de réalisation complémentaires de l'invention, lors de la désactivation d'une cellule ou de plusieurs cellules de puissance, ou lors d'une panne d'une cellule de puissance, la ou les cellules de puissance 101 à désactiver peut être sélectionnée de manière à gérer les vieillissements/temps de fonctionnement respectifs des cellules de puissance 101. La gestion des temps de fonctionnement respectifs des cellules de puissance peut être mise en œuvre indépendamment de la modification du nombre de cellules de puissance actives dans un variateur de vitesse, présentée ci-avant.

Plusieurs cas de figure se présentent.

### Premier cas :

Dans le premier cas, le variateur de vitesse 102 comprend N cellules de puissance 101 par phase. Lorsque la tension moteur de référence calculée ou la commande de vitesse ne requiert pas d'utiliser toutes les cellules de puissance 101, les cellules de puissance 101 inactives peuvent être sélectionnées en fonction des vieillissements respectifs des cellules de puissance 101. Par exemple, chaque cellule de puissance 101 peut comprendre un compteur activé lorsque la cellule de puissance 101 est activée, et désactivé lorsque la cellule de puissance 101 est désactivée, de manière à mesurer le vieillissement de la cellule de puissance.

A titre d'exemple, si M cellules de puissance 101 actives sont requises pour une phase en fonction de la commande de vitesse ou de la tension moteur de référence, M étant inférieur à N, les N-M cellules de puissance ayant le vieillissement le plus élevé sont désactivées, ce qui permet d'homogénéiser le vieillissement des cellules de puissance 101. De manière plus générale, les M cellules de puissance 101 à activer sont sélectionnées de manière à réduire l'écart type des temps de fonctionnement/vieillissements des cellules de puissance 101. De manière alternative, les N-M cellules de puissance 101 ayant le vieillissement le moins élevé sont désactivées, ce qui permet de forcer le vieillissement de certaines des cellules de puissance 101 qui seront ensuite remplacées par des cellules de puissance neuves.

### Deuxième cas :

Dans le deuxième cas, le variateur de vitesse 102 comprend au moins N+1 cellules de puissance 101 par phase, avec ainsi au moins une cellule de puissance de remplacement pour palier au défaut ou à la panne d'une cellule de puissance 101 active.

Lorsque N cellules de puissance 101 par phase sont nécessaires en raison de la tension moteur de référence, de la tension moteur de commande ou de la commande de vitesse (fonctionnement à pleine puissance ou presque), la cellule de puissance de remplacement, qui est inactive, peut être sélectionnée en fonction des vieillissements respectifs des cellules de puissance, comme discuté pour le premier cas. Ainsi, la cellule de puissance de remplacement n'est pas fixe.

De même lorsque M cellules de puissance actives par phase sont requises en fonction de la tension moteur de référence, de la tension moteur de commande ou de la commande de vitesse, M étant inférieur à N, les N-M+1 cellules de puissance ayant les vieillissements les plus élevés sont désactivées, ce qui permet d'homogénéiser le vieillissement des cellules de puissance 101. De manière plus générale, les M cellules de puissance à activer sont sélectionnées de manière à réduire l'écart type des temps de fonctionnement/vieillissements des cellules de puissance 101. De manière alternative, les N-M+1 cellules de puissance ayant les vieillissements les moins élevés sont désactivées, ce qui permet de forcer le vieillissement des autres cellules de puissance 101 qui seront ensuite remplacées par des cellules de puissance neuves.

### Troisième cas :

Dans le troisième cas, le variateur de vitesse 102 comprend N cellules de puissance 101 par phase, et une panne ou un défaut se produit sur l'une des cellules de puissance 101.

Dans ce cas, la cellule de puissance 101 en défaut est désactivée, et le dispositif de commande 120 contrôle le variateur de vitesse selon une configuration avec N-1 cellules de puissance, donc en activant entre 0 et N-1 cellules de puissance 101 en fonction de la tension moteur de référence. Autrement dit, le dispositif de commande 120 diminue la tension maximale qui peut être fournie par le variateur de vitesse 102.

### Quatrième cas :

Dans le quatrième cas, on considère que le variateur de vitesse 102 comprend un nombre Ni de cellules de puissance 101 par phase, i étant un indice de phase (pouvant varier entre 1 et 3 dans le cas d'un variateur de vitesse triphasé par exemple).

En cas de défaut sur une cellule de puissance d'une phase i, la configuration de la branche i du variateur de vitesse est réduite de 1.

Ainsi, la tension maximale qui est atteignable tout en conservant un équilibre entre les phases, correspond au minimum parmi les valeurs maximales atteignables pour chacune des phases.

On définit VmaxVariateur une telle tension maximale, elle est égale à min(Ni*Vmax), min() étant la fonction minimale lorsque l'indice i varie, et Vmax étant la tension maximale que peut fournir une cellule de puissance.

En fonction de la tension moteur de référence ou de la commande de vitesse, un nombre minimal de cellule de puissance nécessaire par phase Li est déterminé, Li pouvant varier entre 1 et min(Ni).

Ainsi, pour chaque phase i, une tension peut être appliquée au moteur en activant un nombre Mi de cellules de puissance compris entre Li et Ni, Mi pouvant être différent par phase.

Il peut ainsi être prévu d'activer plus de cellules de puissance que le nombre Li qui est nécessaire au minimum pour réaliser la tension moteur de référence ou la commande de vitesse, ce qui peut permettre de mettre en œuvre une stratégie de vieillissement sélective des cellules de puissance. Ainsi, le choix de la valeur Mi pour chaque phase peut être fonction d'un critère de vieillissement des cellules de puissance, ou de tout autre critère prédéfini.

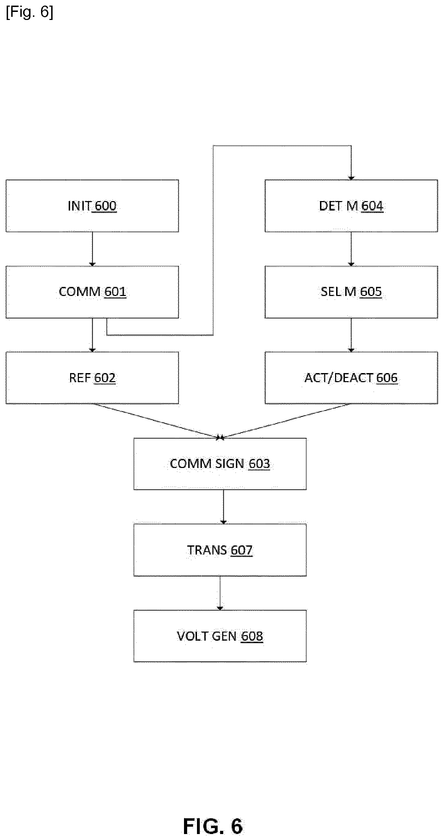

La figure 6 est un diagramme illustrant les étapes d'un procédé selon un mode de réalisation de l'invention. Il sera compris que l'exposé concerne une phase donnée parmi potentiellement plusieurs phases.

A une étape 600, lors d'une phase précédente, K cellules de puissance 101 du variateur de vitesse 102 sont actives et N-K cellules de puissance 101 sont inactives. Une telle configuration peut être adoptée suite à la réception d'une commande de vitesse précédente et au traitement de la commande de vitesse par le processeur 300 et le FPGA 301.

A une étape 601, le processeur 300 reçoit une nouvelle commande de vitesse et traite la commande de vitesse afin d'en déduire une première tension moteur de référence.

A une étape 602, soit la première tension moteur de référence obtenue est transmise directement au module 304 du FPGA, soit elle est traitée par les modules 302 et 303 afin d'obtenir la deuxième tension moteur de référence transmise au module 304 du FPGA. Dans un mode de réalisation comprenant les modules 302 et 303, le processeur 300 détermine en outre un nombre M de cellules de puissance à activer et la fréquence du processeur 300 est modifiée de manière à fournir des signaux triangulaires en fonction du nombre M, conformément à la figure 4.

Des signaux de commande sont alors déterminés à une étape 603, comme décrit ci-avant.

Auparavant, et en parallèle, un nombre M de cellules de puissance à activer a été déterminé à une étape 604, comme décrit précédemment, sur la base de la commande de vitesse (ou de tensions dérivées de la commande de vitesse). Selon une étape 605 optionnelle, M cellules de puissance parmi N ou N+1 (ou plus) sont sélectionnées, en fonction d'un critère donné. Dans ce cas, les signaux de commande sont préférentiellement générés pour les M cellules de puissance sélectionnées.

Plusieurs nombres Mi peuvent être sélectionnés pour plusieurs phases d'indices i du variateur de vitesse, chaque phase d'indice i comprenant Ni cellules de puissance. Le nombre Mi est alors compris entre Ki et Ni comme détaillé ci-dessus.

M cellules de puissance sont ensuite activées (ou demeurent dans leur état actif) et N-M cellules de puissance sont désactivées, à une étape 606. Des interrupteurs de bypass 105 dédiés à cet effet peuvent être prévus pour les cellules de puissance, et les interrupteurs sont fermés pour les cellules désactivées et ouvert pour les cellules activées. En variante, une cellule de puissance peut être désactivée en lui appliquant un rapport cyclique nul, quand bien même son interrupteur de bypass 105 serait ouvert.

Les signaux de commande sont ensuite transmis à une étape 607 aux cellules de commande 103 des cellules de puissance 101 (par exemple des M cellules de puissance 101 actives).

A une étape 608, les cellules de puissance 101 actives génèrent des tensions de sortie respectives en fonction des signaux de commande reçus, de manière à réaliser la tension moteur de référence.

Bien que la présente invention ait été décrite ci-dessus en référence à des modes de réalisation particuliers, l'invention ne se limite aucunement aux formes décrites. L'invention est uniquement limitée par ce qui est défini dans les revendications et d'autres modes de réalisation que ceux décrits ci-dessus peuvent entrer dans la portée des revendications.

En outre, bien que les modes de réalisation aient été décrits ci-dessus comme une combinaison de composants et/ou fonctions, il sera bien compris que des modes de réalisation alternatifs peuvent être obtenus par d'autres combinaisons de composants et/ou fonctions sans pour autant sortir de la portée de l'invention telle que définie par les revendications.

## Revendications

1. Procédé de commande d'un variateur de vitesse (102) alimentant un moteur électrique (100), le variateur de vitesse comprenant une pluralité d'au moins Ni cellules de puissance (101) basse tension reliées en série pour au moins une phase d'indice i, comprenant :
sur réception d'une commande de vitesse (601), détermination (604) d'un nombre Mi de cellules suffisant pour alimenter le moteur à une tension de sortie cible V qui est déterminée à partir de la commande de vitesse ;
activation (606) des Mi cellules de puissance parmi les Ni cellules de puissance, et désactivation (606) des Ni-Mi autres cellules de puissance afin d'alimenter le moteur selon la commande de vitesse.

2. Procédé selon la revendication 1, dans lequel le variateur de vitesse comprend plusieurs phases, chaque phase d'indice j ayant Nj cellules de puissance ;
dans lequel le nombre Mi pour une phase d'indice i est inférieur au minimum des valeurs Nj pour j variant entre 1 et le nombre de phases du variateur de vitesse.

3. Procédé selon la revendication 1 ou 2, dans lequel chaque cellule de puissance (101) est apte à fournir une tension de sortie inférieure à une valeur maximale Vₘₐₓ,
le procédé comprenant la détermination, à partir de la commande de vitesse, de la tension de sortie cible V du variateur de vitesse (102),
dans lequel Mi est tel que Mi*Vₘₐₓ≥V.

4. Procédé selon la revendication 3, dans lequel Mi est le plus petit entier tel que Mi*Vₘₐₓ≥V.

5. Procédé selon l'une des revendications précédentes, dans lequel, préalablement à la réception (601) de la commande de vitesse, le procédé comprend une phase précédente (600) dans laquelle un nombre Ki de cellules de puissance (101) sont actives pour alimenter le moteur, Ki étant inférieur ou égal à Ni et Ki étant différent de Mi ;
dans lequel, si Ki est supérieur à Mi, Ki-Mi cellules de puissance sont désactivées afin d'alimenter le moteur (100) selon la commande de vitesse ;
sinon, Mi-Ki cellules de puissance sont activées afin d'alimenter le moteur selon la commande de vitesse.

6. Procédé selon la revendication 5, dans lequel si | Mi-Ki | ≥2, les | Mi-Ki | cellules de puissance sont activées/désactivées l'une après l'autre.

7. Procédé selon l'une des revendications précédentes, comprenant en outre la transmission de signaux de commande à des cellules de commande (103) des Mi cellules de puissance (101) actives de la phase i ;
dans lequel, pour chaque cellule de puissance (101) active, le signal de commande comprend des ordres de commutation de certains interrupteurs d'un pont en H de la cellule de puissance, et dans lequel chaque signal de commande est généré à partir d'un signal triangulaire et d'une valeur de tension de commande de référence.

8. Procédé selon les revendications 5 et 7, dans lequel, lors de la phase précédente, Ki signaux triangulaires déphasés les uns par rapport aux autres de 2 π /Ki sont utilisés pour générer les signaux de commande respectifs, équivalents à des valeurs respectives V^{ref}ₜ de tensions de commande de référence, t variant entre 1 et Ki ; et
dans lequel, suite à la réception de la commande de vitesse, Mi signaux triangulaires déphasés les uns par rapport aux autres de 2 π/Mi sont utilisés pour générer les signaux de commande respectifs, équivalents à de nouvelles valeurs respectives V^{ref}ₜ de tensions de commande de référence, t variant entre 1 et Mi, les nouvelles valeurs étant déterminées à partir de la commande de vitesse.

9. Procédé selon les revendications 5 et 7, dans lequel, si Ki est supérieur à Mi,
lors de la phase précédente, Ki signaux triangulaires déphasés les uns par rapport aux autres de 2 π /Ki sont utilisés pour générer les signaux de commande respectifs, équivalents à des valeurs respectives V^{ref}ₜ de tensions de commande de référence, t variant entre 1 et Ki ;
et dans lequel, suite à la réception de la commande de vitesse, Ki signaux triangulaires déphasés les uns par rapport aux autres de 2 π /Ki sont utilisés pour générer les signaux de commande respectifs, équivalents à de nouvelles valeurs respectives V^{ref}ₜ de tensions de commande de référence, i variant entre 1 et Ki, les nouvelles valeurs étant déterminées à partir de la commande de vitesse, et dans lequel Ki-Mi nouvelles valeurs V^{ref}ₜ sont fixées égales à zéro.

10. Procédé selon l'une des revendications précédentes, dans lequel le variateur de vitesse (102) comprend, pour chaque cellule de puissance (101), un interrupteur apte à connecter et déconnecter la cellule de puissance de la série de cellules de puissance ;
dans lequel l'interrupteur d'une cellule de puissance active est ouvert et l'interrupteur d'une cellule de puissance inactive est fermé.

11. Procédé selon l'une des revendications précédentes, comprenant en outre la sélection de Mi cellules de puissance (101) parmi les Ni cellules de puissance (101) en fonction d'un critère donné, et l'activation des Mi cellules de puissance (101) sélectionnées.

12. Procédé selon la revendication 11, dans lequel chacune des au moins Ni cellules de puissance (101) est associée avec un compteur mesurant un temps de fonctionnement de la cellule de puissance, et dans lequel le critère donné dépend des temps de fonctionnement respectifs des cellules de puissance (101).

13. Procédé selon la revendication 12, dans lequel les Mi cellules de puissance (101) sont sélectionnées de manière à réduire un écart type entre le critère donné, qui peut dépendre du temps de fonctionnement des cellules de puissance.

14. Un programme d'ordinateur exécutable par une unité de calcul (300; 301) et comprenant des instructions pour, lorsqu'il est exécuté par l'unité de calcul, mettre en œuvre les étapes d'un procédé selon l'une des revendications 1 à 13.

15. Dispositif de commande d'un variateur de vitesse (102) alimentant un moteur électrique (100), le variateur de vitesse comprenant une pluralité d'au moins Ni cellules de puissance (101) basse tension reliées en série pour au moins une phase d'indice i, le dispositif de commande comprenant :
une interface configurée pour recevoir une commande de vitesse ;
une unité de calcul (300; 301) configurée pour déterminer un nombre Mi de cellules suffisant pour alimenter le moteur à une tension déterminée à partir de la commande de vitesse et pour activer Mi cellules de puissance parmi les Ni cellules de puissance, et désactiver Ni-Mi autres cellules de puissance afin d'alimenter le moteur selon la commande de vitesse.

16. Dispositif de commande selon la revendication 15, comprenant un processeur de signal numérique comprenant l'interface pour la réception de la commande de vitesse, le processeur de signal numérique commandant en outre un circuit imprimé programmable, des sorties respectives du circuit imprimé programmable étant reliées aux Ni cellules de puissance,
dans lequel des signaux de commande sont transmis à des cellules de commande des Mi cellules de puissance actives.

## Patentansprüche

1. Verfahren zur Steuerung eines einen Elektromotor (100) versorgenden Drehzahlreglers (102), wobei der Drehzahlregler eine Vielzahl von mindestens Ni in Reihe verbundenen Niederspannungs-Leistungszellen (101) für mindestens eine Phase mit dem Index i enthält, das enthält:
bei Empfang einer Drehzahlsteuerung (601), Bestimmung (604) einer ausreichenden Anzahl Mi von Zellen, um den Motor mit einer Zielausgangsspannung V zu versorgen, die ausgehend von der Drehzahlsteuerung bestimmt wird;
Aktivierung (606) der Mi Leistungszellen unter den Ni Leistungszellen, und
Deaktivierung (606) der Ni-Mi anderen Leistungszellen, um den Motor gemäß der Drehzahlsteuerung zu versorgen.

2. Verfahren nach Anspruch 1, wobei der Drehzahlregler mehrere Phasen enthält, wobei jede Phase mit dem Index j Nj Leistungszellen hat;
wobei die Anzahl Mi für eine Phase mit dem Index i niedriger als das Minimum der Werte Nj für j zwischen 1 und der Anzahl von Phasen des Drehzahlreglers variierend ist.

3. Verfahren nach Anspruch 1 oder 2, wobei jede Leistungszelle (101) eine Ausgangsspannung niedriger als ein maximaler Wert Vₘₐₓ liefern kann,
wobei das Verfahren die Bestimmung, ausgehend von der Drehzahlsteuerung, der Zielausgangsspannung V des Drehzahlreglers (102) enthält,
wobei Mi derart ist, dass gilt Mi*Vₘₐₓ≥V.

4. Verfahren nach Anspruch 3, wobei Mi die kleinste ganze Zahl ist, derart, dass gilt Mi*Vₘₐₓ≥V.

5. Verfahren nach einem der vorhergehenden Ansprüche, wobei das Verfahren vor dem Empfang (601) der Drehzahlsteuerung eine vorhergehende Phase (600) enthält, in der eine Anzahl Ki von Leistungszellen (101) aktiv sind, um den Motor zu versorgen, wobei Ki niedriger als oder gleich Ni ist und Ki sich von Mi unterscheidet;
wobei, wenn Ki höher ist als Mi, Ki-Mi Leistungszellen deaktiviert werden, um den Motor (100) gemäß der Drehzahlsteuerung zu versorgen;
sonst Mi-Ki Leistungszellen aktiviert werden, um den Motor gemäß der Drehzahlsteuerung zu versorgen.

6. Verfahren nach Anspruch 5, wobei, wenn gilt | Mi-Ki | ≥2, die | Mi-Ki | Leistungszellen nacheinander aktiviert/deaktiviert werden.

7. Verfahren nach einem der vorhergehenden Ansprüche, das außerdem die Übertragung von Steuersignalen an Steuerzellen (103) der Mi aktiven Leistungszellen (101) der Phase i enthält;
wobei, für jede aktive Leistungszelle (101), das Steuersignal Schaltbefehle bestimmter Schalter einer H-Brücke der Leistungszelle enthält, und wobei jedes Steuersignal ausgehend von einem Dreiecksignal und von einem Bezugssteuerungsspannungswert erzeugt wird.

8. Verfahren nach den Ansprüchen 5 und 7, wobei, in der vorhergehenden Phase, Ki zueinander um 2π/Ki phasenverschobene Dreiecksignale verwendet werden, um die jeweiligen Steuersignale zu erzeugen, entsprechend jeweiligen Werten V^{ref}ₜ von Bezugssteuerspannungen, wobei t zwischen 1 und Ki variiert; und wobei, nach dem Empfang der Drehzahlsteuerung, Mi zueinander um 2π/Mi phasenverschobene Dreiecksignale verwendet werden, um die jeweiligen Steuersignale zu erzeugen, entsprechend jeweiligen Werten V^{ref}ₜ von Bezugssteuerspannungen, wobei t zwischen 1 und Mi variiert, wobei die neuen Werte ausgehend von der Drehzahlsteuerung bestimmt werden.

9. Verfahren nach den Ansprüchen 5 und 7, wobei, wenn Ki höher ist als ä Mi, während der vorhergehenden Phase, Ki zueinander um 2π/Ki phasenverschobene Dreiecksignale verwendet werden, um die jeweiligen Steuersignale zu erzeugen, entsprechend jeweiligen Werten V^{ref}ₜ von Bezugssteuerspannungen, wobei t zwischen 1 und Ki variiert;
und wobei, nach dem Empfang der Drehzahlsteuerung, Ki zueinander um 2π/Ki phasenverschobene Dreiecksignale verwendet werden, um die jeweiligen Steuersignale zu erzeugen, entsprechend neuen jeweiligen Werten V^{ref}ₜ von Bezugssteuerspannungen, wobei i zwischen 1 und Ki variiert, wobei die neuen Werte ausgehend von der Drehzahlsteuerung bestimmt werden, und wobei Ki-Mi neue Werte V^{ref}ₜ gleich Null festgelegt werden.

10. Verfahren nach einem der vorhergehenden Ansprüche, wobei der Drehzahlregler (102) für jede Leistungszelle (101) einen Schalter enthält, der die Leistungszelle der Reihe von Leistungszellen verbinden und trennen kann;
wobei der Schalter einer aktiven Leistungszelle offen und der Schaler einer inaktiven Leistungszelle geschlossen ist.

11. Verfahren nach einem der vorhergehenden Ansprüche, das außerdem die Auswahl von Mi Leistungszellen (101) unter den Ni Leistungszellen (101) abhängig von einem gegebenen Kriterium und die Aktivierung der Mi ausgewählten Leistungszellen (101) enthält.

12. Verfahren nach Anspruch 11, wobei jede der mindestens Ni Leistungszellen (101) einem Zähler zugeordnet ist, der eine Betriebszeit der Leistungszelle misst, und wobei das gegebene Kriterium von den jeweiligen Betriebszeiten der Leistungszellen (101) abhängt.

13. Verfahren nach Anspruch 12, wobei die Mi Leistungszellen (101) so ausgewählt werden, dass eine typische Abweichung zwischen dem gegebenen Kriterium reduziert wird, die von der Betriebszeit der Leistungszellen abhängen kann.

14. Computerprogramm, das von einer Recheneinheit (300; 301) ausgeführt werden kann und Anweisungen enthält, um, wenn es von der Recheneinheit ausgeführt wird, die Schritte eines Verfahrens nach einem der Ansprüche 1 bis 13 durchzuführen.

15. Steuervorrichtung eines einen Elektromotor (100) versorgenden Drehzahlreglers (102), wobei der Drehzahlregler eine Vielzahl von mindestens Ni in Reihe verbundene Niederspannungs-Leistungszellen (101) für mindestens eine Phase mit dem Index i enthält, wobei die Steuervorrichtung enthält:
eine Schnittstelle, die konfiguriert ist, eine Drehzahlsteuerung zu empfangen;
eine Recheneinheit (300; 301), die konfiguriert ist, eine ausreichende Anzahl Mi von Zellen zu bestimmen, um den Motor mit einer ausgehend von der Drehzahlsteuerung bestimmten Spannung zu versorgen, und um Mi Leistungszellen unter den Ni Leistungszellen zu aktivieren und Ni-Mi andere Leistungszellen zu deaktivieren, um den Motor gemäß der Drehzahlsteuerung zu versorgen.

16. Steuervorrichtung nach Anspruch 15, die einen digitalen Signalprozessor enthält, der die Schnittstelle für den Empfang der Drehzahlsteuerung enthält, wobei der digitale Signalprozessor außerdem eine programmierbare gedruckte Schaltung steuert, wobei jeweilige Ausgänge der programmierbaren gedruckten Schaltung mit den Ni Leistungszellen verbunden sind,
wobei Steuersignale an Steuerzellen der für mindestens eine Phase mit dem Index i Mi aktiven Leistungszellen übertragen werden.

## Claims

1. Method for controlling a variable speed drive (102) supplying power to an electric motor (100), the variable speed drive comprising a plurality of at least Ni low-voltage power cells (101) connected in series for at least one phase of index i, comprising:
upon reception of a speed command (601), determining (604) a number Mi of cells sufficient to supply power to the motor at a target output voltage V that is determined based on the speed command;
activating (606) the Mi power cells from among the Ni power cells, and deactivating (606) the Ni-Mi other power cells in order to supply power to the motor in accordance with the speed command.

2. Method according to Claim 1, wherein the variable speed drive comprises a plurality of phases, each phase of index j having Nj power cells;
wherein the number Mi for a phase of index i is lower than the minimum of the values Nj for j varying between 1 and the number of phases of the variable speed drive.

3. Method according to Claim 1 or 2, wherein each power cell (101) is able to supply an output voltage lower than a maximum value Vₘₐₓ,
the method comprising determining the target output voltage V of the variable speed drive (102) based on the speed command,
wherein Mi is such that Mi*Vₘₐₓ≥V.

4. Method according to Claim 3, wherein Mi is the smallest integer such that Mi*Vₘₐₓ≥V.

5. Method according to one of the preceding claims, wherein, prior to receiving (601) the speed command, the method comprises a preceding phase (600) in which a number Ki of power cells (101) are active in order to supply power to the motor, Ki being lower than or equal to Ni and Ki being other than Mi;
wherein, if Ki is greater than Mi, Ki-Mi power cells are deactivated in order to supply power to the motor (100) in accordance with the speed command;
if not, Mi-Ki power cells are activated in order to supply power to the motor in accordance with the speed command.

6. Method according to Claim 5, wherein, if | Mi-Ki |≥2, the |Mi-Ki| power cells are activated/deactivated one after another.

7. Method according to one of the preceding claims, furthermore comprising transmitting control signals to control cells (103) of the Mi active power cells (101) of the phase i;
wherein, for each active power cell (101), the control signal comprises orders to switch certain switches of an H-bridge of the power cell, and wherein each control signal is generated from a triangular-wave signal and from a reference control voltage value.

8. Method according to Claims 5 and 7, wherein, in the preceding phase, Ki triangular-wave signals that are phase-offset from one another by 2π/Ki are used to generate the respective control signals, equivalent to respective reference control voltage values V^{ref}ₜ, t varying between 1 and Ki; and
wherein, following the reception of the speed command, Mi triangular-wave signals that are phase-offset from one another by 2π/Mi are used to generate the respective control signals, equivalent to new respective reference control voltage values V^{ref}ₜ, t varying between 1 and Mi, the new values being determined based on the speed command.

9. Method according to Claims 5 and 7, wherein, if Ki is greater than Mi,
in the preceding phase, Ki triangular-wave signals that are phase-offset from one another by 2π/Ki are used to generate the respective control signals, equivalent to respective reference control voltage values V^{ref}ₜ, t varying between 1 and Ki;
and wherein, following the reception of the speed command, Ki triangular-wave signals that are phase-offset from one another by 2π/Ki are used to generate the respective control signals, equivalent to new respective reference control voltage values V^{ref}ₜ, i varying between 1 and Ki, the new values being determined based on the speed command, and wherein Ki-Mi new values V^{ref}ₜ are set equal to zero.

10. Method according to one of the preceding claims, wherein the variable speed drive (102) comprises, for each power cell (101), a switch able to connect and disconnect the power cell of the series of power cells,
wherein the switch of an active power cell is open and the switch of an inactive power cell is closed.

11. Method according to one of the preceding claims, furthermore comprising selecting Mi power cells (101) from among the Ni power cells (101) on the basis of a given criterion, and activating the Mi selected power cells (101).

12. Method according to Claim 11, wherein each of the at least Ni power cells (101) is associated with a counter measuring an operating time of the power cell, and wherein the given criterion depends on the respective operating times of the power cells (101).

13. Method according to Claim 12, wherein the Mi power cells (101) are selected so as to reduce a standard deviation between the given criterion, which may depend on the operating time of the power cells.

14. Computer program able to be executed by a processing unit (300; 301) and comprising instructions for implementing the steps of a method according to one of Claims 1 to 13 when it is executed by the processing unit.

15. Device for controlling a variable speed drive (102) supplying power to an electric motor (100), the variable speed drive comprising a plurality of at least Ni low-voltage power cells (101) connected in series for at least one phase of index i, the control device comprising:
an interface configured so as to receive a speed command;
a processing unit (300; 301) configured so as to determine a number Mi of cells sufficient to supply power to the motor at a voltage that is determined based on the speed command and to activate Mi power cells from among the Ni power cells, and deactivate Ni-Mi other power cells in order to supply power to the motor in accordance with the speed command.

16. Control device according to Claim 15, comprising a digital signal processor comprising the interface for receiving the speed command, the digital signal processor furthermore controlling a programmable printed circuit, respective outputs of the programmable printed circuit being connected to the Ni power cells,
wherein control signals are transmitted to control cells of the Mi active power cells.
